# EUROPEAN PATENT APPLICATION

(11) **EP 4 206 916 A1**
(43) Date of publication of application: **05.07.2023**
(21) Application number: 21873938.1
(22) Date of filing: 23.06.2021
(51) Int. Cl.: G06F 9/455

(54) **DESKTOP CLOUD SYSTEM AND RELATED METHOD, APPARATUS, DEVICE, AND MEDIUM**

(30) Priority: 29.09.2020 CN 202011052754; 13.11.2020 CN 202011268930
(71) Applicant: Huawei Cloud Computing Technologies Co., Ltd., Guizhou 550025 (CN)
(72) Inventor: LI, Xiuqiao, Shenzhen, Guangdong 518129 (CN); SUN, Hongwei, Shenzhen, Guangdong 518129 (CN)
(74) Representative: Körber, Martin Hans
(86) International application number: PCT/CN2021/101742
(87) International publication number: WO 2022/068276

(57) **Abstract**

This application provides a desktop cloud system, including a desktop cloud server and a terminal. A virtual desktop instance is deployed on the desktop cloud server. The desktop cloud server is configured to: obtain encoded data output by the virtual desktop instance, and send the encoded data to the terminal corresponding to the virtual desktop instance. The terminal is configured to: decode the encoded data to obtain raw data, and present a virtual desktop based on the raw data. Because secondary transcoding does not need to be performed, additional computing overheads are avoided, and the desktop cloud server can serve a large quantity of terminals, thereby reducing hardware costs of the desktop cloud system.

## Description

### TECHNICAL FIELD

This application relates to the field of cloud computing technologies, and in particular, to a desktop cloud system, a method, an apparatus, and a device for providing a virtual desktop, and a computer-readable storage medium.

### BACKGROUND

To meet requirements of doing office work anytime and anywhere, the industry proposes a virtual desktop infrastructure (virtual desktop infrastructure, VDI). A system implemented based on this architecture is referred to as a desktop cloud system. The desktop cloud system includes a personal device such as a terminal and a desktop cloud server. A user may access, by using a desktop cloud client installed on a personal device of the user, a desktop virtual machine environment deployed on the desktop cloud server.

A core technology of the desktop cloud system is a desktop access protocol. The desktop access protocol defines an interaction protocol and a communication channel for transmitting data such as a desktop image, a desktop video, and a peripheral event between the desktop cloud client and the desktop cloud server (for example, a virtual machine on the desktop cloud server).

However, proprietary protocol specifications are respectively defined for different desktop cloud products. To support different protocol specifications, an open-source HTML5 client project, such as Apache Guacamole, deploys an extensible protocol conversion component architecture on a web server, adds an independent component (such as guacd and remote desktop protocol component) to support different protocol specifications, and converts data that supports the different protocol specifications, into protocol data that complies with a Guacamole protocol specification. A front-end web client and a server component are connected through an open Guacamole protocol.

This architecture improves flexibility and protocol extensibility, but brings large performance problems. Specifically, the protocol conversion component needs to consume a large quantity of computing capabilities to decrypt and decode server-end protocol data such as a video stream, and re-compress, in the decoded data, data such as a video, an image, and an audio according to an algorithm of a Guacamole protocol. Therefore, a large quantity of additional computing overheads are generated, a quantity of web clients served by a single web server is limited, and hardware costs of the desktop cloud system are increased.

### SUMMARY

This application provides a desktop cloud system. The desktop cloud system includes a desktop cloud server and a terminal. The desktop cloud server obtains encoded data output by a virtual desktop instance, and sends the encoded data to the terminal. The terminal directly decodes the encoded data on a terminal side, and presents a virtual desktop based on raw data obtained through decoding. Because secondary transcoding does not need to be performed, additional computing overheads are avoided, and the desktop cloud server can serve a large quantity of terminals, thereby reducing hardware costs of the desktop cloud system. This application further provides a method for providing a virtual desktop based on a desktop cloud system, a corresponding apparatus, a corresponding device, a computer-readable storage medium, and a computer program product.

According to a first aspect, this application provides a desktop cloud system. The desktop cloud system includes a desktop cloud server and a terminal. A virtual desktop instance is deployed on the desktop cloud server. The virtual desktop instance is specifically a process or a thread configured to provide a virtual desktop. The process or the thread may directly run on a physical machine such as the desktop cloud server, or run on a virtual machine or a container on a physical machine. The virtual desktop instance may be generated by the desktop cloud server by executing a code block that has a function of providing a virtual desktop.

Specifically, the desktop cloud server is configured to: obtain encoded data output by the virtual desktop instance, and send the encoded data to the corresponding terminal. Then, the terminal decodes the encoded data to obtain raw data on a terminal side, and presents a virtual desktop based on the raw data. Because secondary transcoding does not need to be performed, additional computing overheads caused by the secondary transcoding are avoided, a quantity of terminals that can be served by the desktop cloud server is increased, and hardware costs of the desktop cloud system are reduced.

In some possible implementations, the desktop cloud server does not encode or decode the encoded data output by the virtual desktop instance. This resolves a problem, in a related technology, that a large quantity of computing capabilities need to be consumed to decrypt and decode server-end protocol data such as a video stream, and re-compress, in the decoded data, data such as a video, an image, and an audio according to an algorithm of a uniform protocol, thereby reducing computing overheads and reducing hardware costs of the desktop cloud system.

In some possible implementations, the terminal is specifically configured to compile, into bytecode by using a bytecode specification, for example, an algorithm provided by a proprietary desktop access protocol, so that the bytecode is directly executed subsequently, to decode the encoded data to obtain the raw data. The bytecode specification includes but is not limited to a WebAssembly (WebAssembly, wasm) bytecode specification and a Java bytecode specification.

After source code of the algorithm provided by the proprietary desktop access protocol is compiled into the bytecode, the source code of the algorithm is invisible on the terminal, thereby resolving a problem of leakage of the proprietary desktop access protocol. Further, the algorithm provided by the proprietary desktop access protocol is compiled into the bytecode, for example, is compiled into WebAssembly bytecode. An amount of data of the WebAssembly bytecode is greatly reduced, and an interpreter is not required for interpretation, so that loading and instantiation can be fast, and a waiting time before running is reduced. In this way, a computing-intensive task such as encoding or decoding can be performed with performance close to that of a binary executable program, and encoding or decoding acceleration is implemented, thereby further increasing a quantity of terminals that can be served by the desktop cloud server, and reducing hardware costs.

In some possible implementations, the terminal is further configured to: receive an event, encode the event to obtain an encoded event, and then send the encoded event to the desktop cloud server. Correspondingly, the desktop cloud server is specifically configured to operate the virtual desktop instance based on the encoded event, to obtain the encoded data output by the virtual desktop instance.

In this way, a virtual desktop can be operated remotely, and an effect similar to that of operating a desktop locally is achieved, thereby providing convenience for a user and improving user experience.

In some possible implementations, the terminal may process in parallel any combination of a plurality of the following steps:
encoding the event to obtain the encoded event;
sending the encoded event to the desktop cloud server;
receiving the encoded data; and
decoding the encoded data to obtain the raw data.

Specifically, the terminal may create a plurality of parallel threads, for example, create a plurality of parallel peripheral processing threads, audio processing threads, transmission threads, video processing threads, and image processing threads. The plurality of parallel threads may be executed in parallel. In this way, desktop protocol operations can be decoupled, so that synchronization dependency between the desktop protocol operations may be prevented from affecting real-time performance of a desktop operation.

In some possible implementations, the plurality of parallel threads created by the terminal may share memory. In this way, the threads may exchange data by using the shared memory, thereby reducing data copying. Resource occupation can be reduced, and further, a latency caused by data copying is reduced.

In some possible implementations, the event specifically includes at least one of a mouse input event, a keyboard input event, and an audio input event. In this way, different interaction modes such as keyboard and mouse interaction and voice interaction can be provided to meet personalized requirements of a user.

In some possible implementations, the raw data includes any one or more of image data, audio data, and video data. The desktop cloud system not only provides a virtual desktop for the user, but also remotely displays an audio or a video to meet personalized requirements of the user.

In some possible implementations, a browser client used to access the virtual desktop instance is deployed in the terminal. Because the browser client has good compatibility, the desktop cloud system based on the browser client has high availability. In addition, it is unnecessary to develop dedicated clients of corresponding versions for different personal devices, thereby further reducing costs of the desktop cloud system.

In some possible implementations, an application layer long connection, for example, a websocket long connection, may be established between the terminal and the desktop cloud server. In this way, the terminal and the desktop cloud server may directly transmit the encoded data through the application layer long connection without performing secondary transcoding, thereby reducing computing overheads and reducing hardware costs of the desktop cloud system.

According to a second aspect, this application provides a method for providing a virtual desktop. The method may be performed by a desktop cloud system. Specifically, the desktop cloud system includes a desktop cloud server and a terminal, a virtual desktop instance is deployed on the desktop cloud server, and the method includes:

The desktop cloud server obtains encoded data output by the virtual desktop instance, and sends the encoded data to the terminal corresponding to the virtual desktop instance.

The terminal decodes the encoded data to obtain raw data, and presents a virtual desktop based on the raw data.

In some possible implementations, the method further includes:

The desktop cloud server does not encode or decode the encoded data output by the virtual desktop instance.

In some possible implementations, that the terminal decodes the encoded data to obtain raw data includes:

The terminal decodes, by using a bytecode specification, the encoded data to obtain the raw data.

In some possible implementations, the method further includes:

The terminal receives an event, encodes the event to obtain an encoded event, and then sends the encoded event to the desktop cloud server.

That the desktop cloud server obtains encoded data output by the virtual desktop instance includes:

The desktop cloud server operates the virtual desktop instance based on the encoded event, to obtain the encoded data output by the virtual desktop instance.

In some possible implementations, the terminal processes in parallel any combination of a plurality of the following steps:
encoding the event to obtain the encoded event;
sending the encoded event to the desktop cloud server;
receiving the encoded data; and
decoding the encoded data to obtain the raw data.

In some possible implementations, the event includes at least one of a mouse input event, a keyboard input event, and an audio input event.

In some possible implementations, the raw data includes any one or more of image data, audio data, and video data.

In some possible implementations, a browser client used to access the virtual desktop instance is deployed in the terminal.

According to a third aspect, this application provides an apparatus for providing a virtual desktop. The apparatus includes a module configured to perform the method steps performed by the desktop cloud server according to any one of the second aspect or the implementations of the second aspect.

According to a fourth aspect, this application provides an apparatus for providing a virtual desktop. The apparatus includes a module configured to perform the method steps performed by the terminal according to any one of the second aspect or the implementations of the second aspect.

According to a fifth aspect, this application provides a desktop cloud server. The desktop cloud server is configured to implement a function of the desktop cloud server in the desktop cloud system according to any one of the first aspect or the implementations of the first aspect.

According to a sixth aspect, this application provides a terminal. The terminal is configured to implement a function of the terminal in the desktop cloud system according to any one of the first aspect or the implementations of the first aspect.

According to a seventh aspect, this application provides a virtual desktop instance. The virtual desktop instance is used to implement a function of the virtual desktop instance in the desktop cloud system according to any one of the first aspect or the implementations of the first aspect.

According to an eighth aspect, this application provides a desktop cloud server. The desktop cloud server includes a processor and a memory. The processor and the memory communicate with each other. The processor is configured to execute instructions stored in the memory, so that the desktop cloud server performs the method according to any one of the second aspect or the implementations of the second aspect.

According to a ninth aspect, this application provides a terminal. The terminal includes a processor and a memory. The processor and the memory communicate with each other. The processor is configured to execute instructions stored in the memory, so that the terminal performs the method according to any one of the second aspect or the implementations of the second aspect.

According to a tenth aspect, this application provides a computer-readable storage medium. The computer-readable storage medium stores instructions, and the instructions are used to instruct a desktop cloud server to perform the method according to any one of the second aspect or the implementations of the second aspect.

According to an eleventh aspect, this application provides a computer-readable storage medium. The computer-readable storage medium stores instructions, and the instructions are used to instruct a terminal to perform the method according to any one of the second aspect or the implementations of the second aspect.

According to a twelfth aspect, this application provides a computer program product including instructions. When the instructions are run on a desktop cloud server, the desktop cloud server is enabled to perform the method according to any one of the second aspect or the implementations of the second aspect.

According to a thirteenth aspect, this application provides a computer program product including instructions. When the instructions are run on a desktop cloud server, a terminal is enabled to perform the method according to any one of the second aspect or the implementations of the second aspect.

In this application, based on implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings used in describing the embodiments.
FIG. 1 is a system diagram of an architecture of a desktop cloud system according to an embodiment of this application;
FIG. 2 is a flowchart of a method for providing a virtual desktop according to an embodiment of this application;
FIG. 3 is a schematic flowchart of performing data transmission by a terminal-side protocol module according to an embodiment of this application;
FIG. 4 is a schematic flowchart of performing data exchange by a browser client according to an embodiment of this application;
FIG. 5 is a flowchart of a method for providing a virtual desktop according to an embodiment of this application;
FIG. 6 is a schematic diagram of a structure of a desktop cloud server according to an embodiment of this application; and
FIG. 7 is a schematic diagram of a structure of a terminal according to an embodiment of this application.

### DESCRIPTION OF EMBODIMENTS

The terms "first" and " second" in the embodiments of this application are merely intended for a purpose of description, and shall not be understood as an indication or implication of relative importance or implicit indication of a quantity of indicated technical features. Therefore, a feature limited by "first" or " second" may explicitly indicate or implicitly include one or more such features.

Some technical terms used in the embodiments of this application are first described.

A virtual desktop infrastructure (virtual desktop infrastructure, VDI) is a system architecture that provides a virtual desktop for a user. A principle of a VDI architecture-based virtual desktop solution is as follows: A dedicated virtual machine is prepared for each user on a server side, an operating system and various applications that are required by the user are deployed on the virtual machine, and a complete virtual machine desktop (namely, a virtual desktop) is delivered to a remote user through a desktop access protocol.

The VDI architecture-based system is also referred to as a desktop cloud system. The desktop cloud system includes a desktop cloud server and a terminal. The desktop access protocol defines an interaction protocol and a communication channel for transmitting data such as a desktop image, a video, and a peripheral event between the terminal (for example, a desktop cloud client deployed on the terminal) and the desktop cloud server (for example, a virtual machine deployed on the desktop cloud server).

Different types of desktop cloud systems define proprietary desktop access protocols of the systems. To support different protocol specifications, an open-source client project deploys an extensible protocol conversion component architecture on a web (web) server. The extensible protocol conversion component architecture adds an independent component to support different protocol specifications, and converts the independent component into protocol data that complies with a specified protocol specification, such as a Guacamole protocol specification. The terminal and the desktop cloud server are connected through the Guacamole protocol specification, which may improve flexibility and protocol extensibility of the desktop cloud system.

However, the protocol conversion component needs to consume a large quantity of computing capabilities to decrypt and decode server-end protocol data such as a video stream, and re-compress, in the decoded data, data such as a video, an image, and an audio according to an algorithm of a Guacamole protocol. Therefore, a large quantity of additional computing overheads are generated, a quantity of web clients served by the web server is limited, and hardware costs of the desktop cloud system are increased.

In view of this, an embodiment of this application provides a desktop cloud system and a method for providing a virtual desktop based on the desktop cloud system. The desktop cloud system includes a desktop cloud server and a terminal. A virtual desktop instance is deployed on the desktop cloud server. The desktop cloud server is configured to: obtain encoded data output by the virtual desktop instance, and send the encoded data to the corresponding terminal. Then, the terminal decodes the encoded data to obtain raw data on a terminal side, and presents a virtual desktop based on the raw data. Because secondary transcoding does not need to be performed, additional computing overheads caused by the secondary transcoding are avoided, a quantity of terminals that can be served by the desktop cloud server is increased, and hardware costs of the desktop cloud system are reduced.

The terminal may precompile, into bytecode by using a bytecode specification, for example, by using a WebAssembly (WebAssembly, wasm) bytecode specification, an algorithm provided by a proprietary desktop access protocol, and directly execute the bytecode to perform encoding or decoding. Source code of the algorithm provided by the proprietary desktop access protocol is invisible on the terminal, thereby resolving a problem of leakage of the proprietary desktop access protocol.

In addition, the algorithm provided by the proprietary desktop access protocol is compiled into the bytecode, for example, is compiled into WebAssembly bytecode. An amount of data of the WebAssembly bytecode is greatly reduced, and an interpreter is not required for interpretation, so that loading and instantiation can be fast, and a waiting time before running is reduced. In this way, a computing-intensive task such as encoding or decoding can be performed with performance close to that of a binary executable program, and encoding or decoding acceleration is implemented, thereby further increasing a quantity of terminals that can be served by the desktop cloud server, and further reducing hardware costs.

To make the technical solutions of this application clearer and easier to understand, the following describes a desktop cloud system provided in the embodiments of this application with reference to the accompanying drawings.

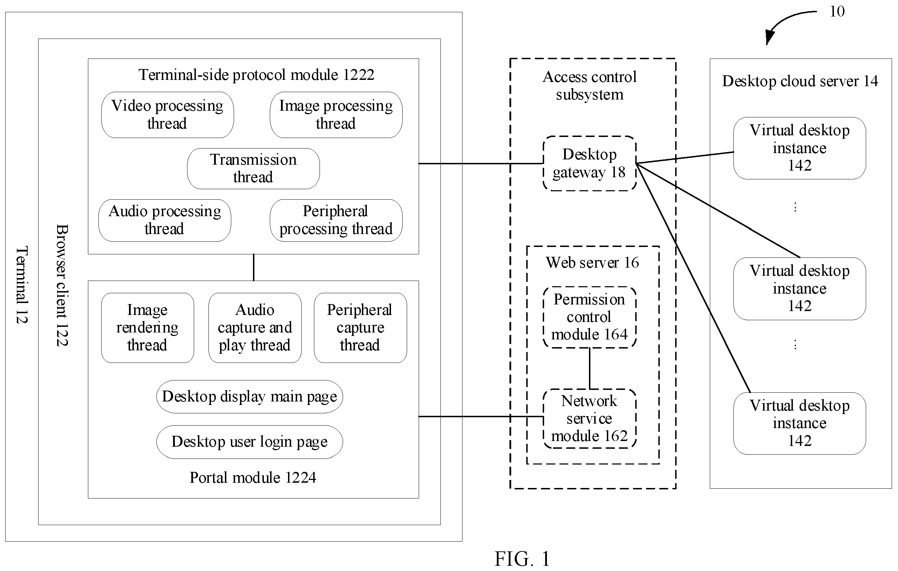

Referring to a schematic diagram of an architecture of a desktop cloud system shown in FIG. 1, a desktop cloud system 10 includes a terminal 12 and a desktop cloud server 14. A virtual desktop instance 142 is deployed on the desktop cloud server 14. The virtual desktop instance 142 is specifically a process or a thread configured to provide a virtual desktop. The process or the thread may directly run on a physical machine such as the desktop cloud server 14, or run on a virtual machine or a container on a physical machine. A client used to access the virtual desktop instance 142, for example, a browser client 122 used to access the virtual desktop instance, may be deployed on the terminal 12. In some embodiments, the browser client 122 (or the terminal 12) is in a one-to-one correspondence with the virtual desktop instance 142.

Specifically, the desktop cloud server 14 is configured to obtain encoded data output by the virtual desktop instance 142, and the encoded data is data obtained by encoding raw data, for example, data obtained by encoding based on an algorithm in a proprietary desktop access protocol. The raw data may include any one or more of image data, audio data, and video data. Then, the desktop cloud server 14 sends the encoded data to the terminal 12 corresponding to the virtual desktop instance 142. The terminal 12 is configured to: decode the encoded data to obtain the raw data, and present a virtual desktop based on the raw data. The terminal 12 may specifically obtain the raw data through decoding, and present the virtual desktop by using the browser client 122.

In some possible implementations, referring to FIG. 1, the browser client 122 includes a terminal-side protocol module 1222 and a portal module 1224. The terminal-side protocol module 1222 is configured to decode the encoded data to obtain the raw data, and the portal module 1224 is configured to present the virtual desktop based on the raw data.

It should be noted that the terminal-side protocol module 1222 in the browser client 122 may be obtained in real time when a virtual desktop needs to be used. Specifically, the desktop cloud system 10 further includes an access control subsystem, and the access control subsystem includes a web server 16. The portal module 1224 may present a desktop user login page, capture, by using the desktop user login page, login information entered by a user, for example, information such as a user name, a password, and a verification code, and then send the login information to a network service module 162 in the web server 16. The network service module 162 may perform login verification based on the login information, for example, compare the login information with related information in an account database, to implement login verification. When the login verification succeeds, the browser client 122 may download code of the terminal-side protocol module 1222 from the web server 16 such as the network service module 162, and then deploy the terminal-side protocol module 1222 on the browser client 122 based on the code.

Further, the web server 16 may further include a permission control module 164. The permission control module 164 is configured to authenticate a login user, for example, authenticate access to the virtual desktop instance 142. After the authentication succeeds, the login user is allowed to access the virtual desktop instance 142. Therefore, the browser client 122 may download the code of the terminal-side protocol module 1222 from the web server 16. If the authentication fails, the login user is rejected to access the virtual desktop instance 142, and the browser client 122 fails to download the code of the terminal-side protocol module 1222.

The network service module 162 and the permission control module 164 may be software modules or hardware modules having corresponding functions. When the network service module 162 and the permission control module 164 are software modules, the software modules may be integrated into a same piece of software, or may be distributed in different pieces of software. In addition, FIG. 1 is described by using an example in which the network service module 162 and the permission control module 164 are deployed on the web server 16. In some embodiments, the network service module 162 and the permission control module 164 may be separately deployed on different servers. For example, the network service module 162 is deployed on the web server 16, and the permission control module 164 is deployed on an authentication server.

In some possible implementations, the browser client 122 is configured to: receive an event, for example, any one or more of a keyboard input event, a mouse input event, or an audio input event, encode the event to obtain an encoded event, and send the encoded event to the desktop cloud server 14. Correspondingly, the desktop cloud server 14 is configured to operate the virtual desktop instance 142 based on the encoded event, to obtain the encoded data output by the virtual desktop instance 142.

The browser client 122 receives the event by using the portal module 1224. The portal module 1224 includes a peripheral capture thread, an audio capture and play thread, and an image rendering thread. The peripheral capture thread is configured to capture a peripheral input event, for example, a keyboard input event or a mouse input event. The audio capture and play thread is configured to capture an audio input event.

The terminal-side protocol module 1222 may obtain the foregoing event from the portal module 1224, encode the event to obtain an encoded event, and then send the encoded event to the desktop cloud server 14. Specifically, the terminal-side protocol module 1222 includes a transmission thread, a peripheral processing thread, and an audio processing thread. The transmission thread may be configured to obtain an event from the portal module 1224, the peripheral processing thread may be configured to encode the event to obtain an encoded event, and the transmission thread is further configured to send the encoded event to the desktop cloud server 14.

The terminal-side protocol module 1222 may further include any one or more of an image processing thread and a video processing thread. The transmission thread is further configured to obtain the encoded data output by the virtual desktop instance 142, and the encoded data may be encoded image data, encoded audio data, or encoded video data. The image processing thread is configured to decode encoded image data, the audio processing thread is further configured to decode encoded audio data, and the video processing thread is configured to decode encoded video data.

The portal module 1224 may obtain image data from the terminal-side protocol module 1222, and perform image rendering by using the image rendering thread, to present a virtual desktop on a desktop display main page. The portal module 1224 may further obtain audio data from the terminal-side protocol module 1222, and play an audio by using the audio capture and play thread. Similarly, the portal module 1224 may further obtain video data from the terminal-side protocol module 1222, and then play a video on the desktop display main page.

In some possible implementations, the terminal-side protocol module 1222 may be implemented by using a bytecode specification, for example, a WebAssembly bytecode specification. The terminal-side protocol module 1222 runs in a WebAssembly runtime environment, and may natively support a plurality of threads. Therefore, the browser client 122 may create, by using the terminal-side protocol module 1222, parallel threads, such as a parallel video processing thread, an image processing thread, an audio processing thread, a peripheral processing thread, and a transmission thread, to perform in parallel any combination of a plurality of the following steps:
encoding the event to obtain the encoded event;
sending the encoded event to the desktop cloud server 14;
receiving the encoded data; and
decoding the encoded data to obtain the raw data.

The plurality of parallel threads may be used to decouple desktop protocol operations, so that synchronization dependency between the desktop protocol operations may be prevented from affecting real-time performance of a desktop operation.

Further, the threads may share memory. In this way, when exchanging data, the threads may directly exchange data by using the shared memory, thereby reducing a quantity of data copying times, reducing resource occupation, and improving resource utilization. For example, the peripheral processing thread and the transmission thread may share memory. After the peripheral processing thread encodes a peripheral input event to obtain an encoded event, the transmission thread directly obtains the encoded event by using the shared memory, and transmits the encoded event to the desktop cloud server 14.

Similarly, the portal module 1224 and the terminal-side protocol module 1222 may also share memory. In this way, a quantity of data copying times between the portal module 1224 and the terminal-side protocol module 1222 can be reduced, resource occupation can be reduced, resource utilization can be improved, and a latency caused by data copying can be reduced.

In addition, the terminal-side protocol module 1222 implemented based on a bytecode specification such as WebAssembly may execute, on the browser client 122, a computing-intensive task such as protocol encoding or decoding with performance close to that of a binary executable program, to implement encoding or decoding acceleration. Compared with a terminal-side program based on an interpreted language such as asm.js or javascript, performance can be improved by several times or more than 10 times. In this way, a quantity of browser clients 122 that can be served by the desktop cloud server 14 is further increased, and hardware costs are reduced.

In addition, the desktop cloud system 10 may compress an event or raw data by using an efficient encoding and compression algorithm provided by a proprietary protocol specification, to obtain data with a high compression ratio. Transmission can be performed between the terminal 12 (for example, the browser client 122) and the desktop cloud server 14 by using only a small quantity of bandwidth resources, thereby improving bandwidth resource utilization efficiency, ensuring real-time performance of keyboard and mouse interaction, and resolving problems such as video image jitter and smearing.

A plurality of virtual desktop instances are deployed on the desktop cloud server 14 to provide services for a plurality of browser clients 122. In consideration of this, the desktop cloud system 10 may further include a desktop gateway 18. The desktop gateway 18 is specifically configured to: route encoded events of different browser clients 122, and route encoded data of different virtual desktop instances 142.

An application layer long connection may be established between the browser client 122 and the desktop cloud server 14. The application layer long connection is used to transmit an encoded event or encoded data. The desktop cloud server 14 does not encode or decode the encoded data output by the virtual desktop instance 142. In other words, secondary transcoding does not need to be performed, thereby increasing a quantity of browser clients 122 that can be served by the desktop cloud server 14, and reducing hardware costs. The application layer long connection is a long connection established at an application layer, and the application layer long connection may be specifically a websocket (Web Socket) long connection.

As shown in FIG. 1, when the desktop cloud system 10 further includes a desktop gateway 18, the application layer long connection established between the browser client 122 and the desktop cloud server 14 may be an application layer long connection established between the terminal-side protocol module 1222 and the desktop gateway 18. In this way, the terminal-side protocol module 1222 may send the encoded event to the desktop gateway 18 through the application layer long connection between the terminal-side protocol module 1222 and the desktop gateway 18, and then the desktop gateway 18 transmits the encoded event to a corresponding virtual desktop instance 142 through a connection to the corresponding virtual desktop instance 142, for example, a user datagram (user datagram protocol, UDP) connection or a transmission control protocol (transmission control protocol, TCP) connection. Similarly, the virtual desktop instance 142 may perform an operation based on the encoded event to obtain corresponding raw data, then encode the raw data, and output encoded data. The desktop cloud server 14 obtains the encoded data output by the virtual desktop instance, and transmits the encoded data to the desktop gateway 18 through a connection to the desktop gateway 18, for example, a TCP or UDP connection, and then the desktop gateway 18 transmits the encoded data to the terminal-side protocol module 1222 through the application layer long connection to the terminal-side protocol module 1222.

It should be noted that FIG. 1 shows only one terminal 12. In some possible implementations, the desktop cloud system 10 may include a plurality of terminals 12, and the desktop cloud server 14 may provide services for the plurality of terminals 12. This is not limited in this embodiment of this application.

In FIG. 1, an architecture of the desktop cloud system 10 is described in detail. To make the technical solutions of this application clearer and easier to understand, the following describes in detail the method provided in the embodiments of this application from a perspective of the desktop cloud system 10.

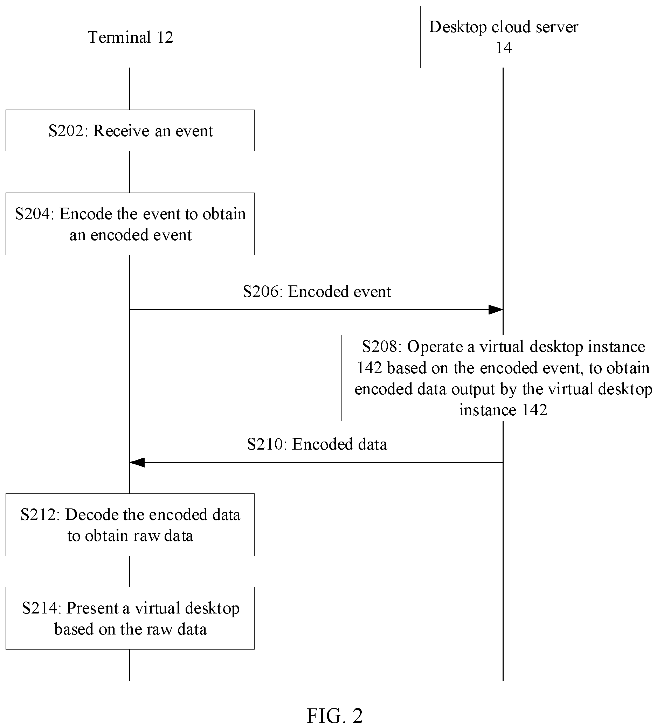

Referring to a flowchart of a method for providing a virtual desktop shown in FIG. 2, the method includes the following steps.

S202: The terminal 12 receives an event.

The event may be a peripheral input event or an audio input event. The peripheral input event includes a keyboard input event, a mouse input event, a touch input event, a stylus input event, and the like, which are not listed one by one herein.

During specific implementation, a client, for example, the browser client 122, used to access the virtual desktop instance 142, is deployed on the terminal 12. The browser client 122 may capture a peripheral input event by using the peripheral capture thread in the portal module 1224, and capture an audio input event by using the audio capture and play thread. Details are not described herein.

S204: The terminal 12 encodes the event to obtain an encoded event.

The terminal-side protocol module 1222 in the browser client 122 deployed on the terminal 12 may be implemented based on a bytecode specification such as WebAssembly. The terminal 12 may directly encode the event on a terminal side by using the terminal-side protocol module 1222 implemented based on the bytecode specification and by using a proprietary desktop access protocol, specifically, by using an algorithm provided by the desktop access protocol, to obtain the encoded event. The encoded event may be specifically an encoded event with a high compression ratio, so as to reduce bandwidth resource consumption. In addition, the terminal-side protocol module 1222 implemented based on the bytecode specification does not need an interpreter for interpretation, and can encode an event with performance close to that of a binary executable program, thereby greatly improving encoding efficiency.

It should be noted that the terminal-side protocol module 1222 may share memory with the portal module 1224. Based on this, the terminal-side protocol module 1222 may directly obtain an event by using the shared memory. In this way, a quantity of copy operations can be reduced, thereby reducing unnecessary overheads.

S206: The terminal 12 sends the encoded event to the desktop cloud server 14.

Specifically, the terminal 12 may first send the encoded event to the desktop gateway 18 through an application layer long connection, for example, a websocket long connection, between the terminal-side protocol module 1222 and the desktop gateway 18, and then the desktop gateway 18 sends the encoded event to the desktop cloud server 14 through a connection to the desktop cloud server 14, for example, a TCP or UDP connection. The desktop gateway 18 may route the encoded event to the virtual desktop instance 142 that is deployed on the desktop cloud server 14 and that corresponds to the terminal 12.

S208: The desktop cloud server 14 is configured to operate the virtual desktop instance 142 based on the encoded event, to obtain encoded data output by the virtual desktop instance 142.

Specifically, the desktop cloud server 14 provides the encoded event for the corresponding virtual desktop instance 142, and the virtual desktop instance 142 may decode the encoded event to obtain an input event, for example, a peripheral input event or an audio input event. The virtual desktop instance 142 may perform a corresponding operation based on the input event to obtain raw data, for example, obtain image data, audio data, or video data. The virtual desktop instance 142 may encode the raw data to obtain encoded data, and output the encoded data. The desktop cloud server 14 obtains the encoded data output by the virtual desktop instance.

It should be noted that, when the method for providing a virtual desktop in this embodiment of this application is performed, S202 to S208 may not be performed. For example, the desktop cloud server 14 may directly obtain the encoded data output by the virtual desktop instance 142. This is not limited in this embodiment of this application.

S210: The desktop cloud server 14 sends the encoded data to the terminal 12.

Specifically, the desktop cloud server 14 may send the encoded data to the terminal 12 through the application layer long connection, for example, the websocket long connection, between the desktop gateway 18 and the terminal-side protocol module 1222, for example, to the terminal-side protocol module 1222 in the browser client 122 deployed on the terminal 12.

S212: The terminal 12 decodes the encoded data to obtain the raw data.

The terminal-side protocol module 1222 in the browser client 122 deployed on the terminal 12 may be implemented based on a bytecode specification such as WebAssembly. The terminal 12 may directly decode the encoded data on a terminal side by using the terminal-side protocol module 1222 implemented based on the bytecode specification and by using a proprietary desktop access protocol, specifically, an algorithm provided by the desktop access protocol, to obtain the raw data. In addition, the terminal-side protocol module 1222 implemented based on the bytecode specification does not need an interpreter for interpretation, and can decode the encoded data with performance close to that of a binary executable program, thereby greatly improving decoding efficiency.

S214: The terminal 12 presents a virtual desktop based on the raw data.

When the raw data includes image data, the terminal may perform image rendering based on the image data, so as to present the virtual desktop. Specifically, the portal module 1224 in the browser client 122 deployed in the terminal 12 may obtain image data from the terminal-side protocol module 1222, then perform image rendering by using the image rendering thread, and display a rendered image on a desktop display main page, to present the virtual desktop.

When output data includes video data, the terminal 12 may further perform video rendering based on the video data, to present a video picture. When the output data includes audio data, the terminal 12 may further play an audio based on the audio data.

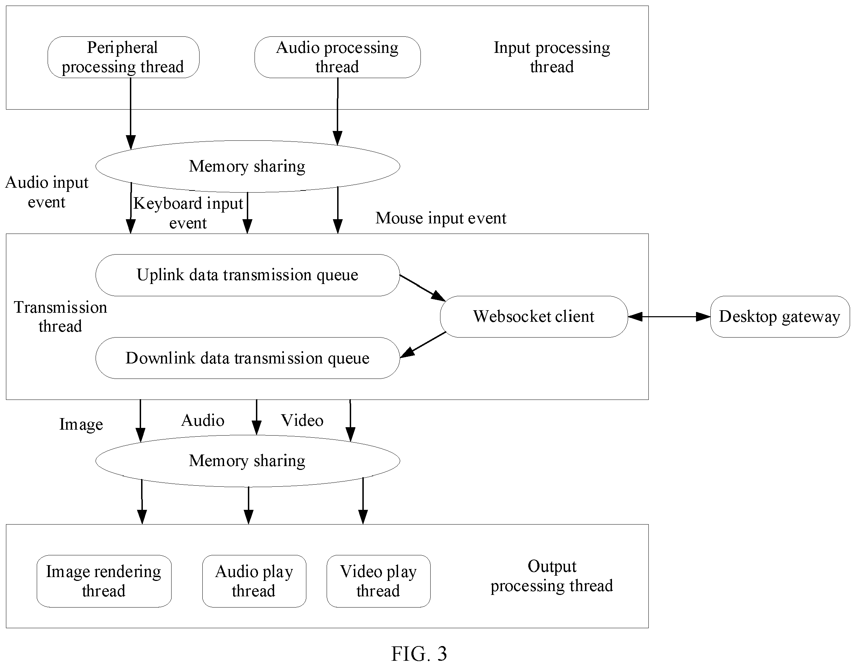

In the embodiment shown in FIG. 2, the terminal-side protocol module 1222 may perform bidirectional data transmission. Specifically, the terminal-side protocol module 1222 may implement the bidirectional data transmission by using the transmission thread. Referring to a schematic flowchart of data transmission shown in FIG. 3, the transmission thread may include an uplink data transmission queue, a downlink data transmission queue, and a websocket client.

Specifically, the uplink data transmission queue obtains, in a memory sharing manner from an input processing thread such as the peripheral processing thread or the audio processing thread, an encoded event that needs to be transmitted to the desktop cloud server 14, and the encoded event includes an encoded keyboard input event, an encoded mouse input event (mouse press or click), or encoded microphone audio input data.

The websocket client converts an underlying TCP/UDP communication request corresponding to uplink data (specifically, the foregoing encoded event) generated by the terminal-side protocol module 1222 into a websocket request, and interacts with a websocket listening port of the desktop gateway 18, and the encoded data obtained from the desktop cloud server 14 is buffered into the downlink data transmission queue.

The downlink data transmission queue buffers the encoded data obtained from the desktop cloud server 14, including encoded image data, encoded video data, encoded audio data, and the like, and then forwards, in a memory sharing manner, the encoded data to an output processing thread, for example, the image processing thread, the audio processing thread, and the video processing thread. The output processing thread decodes the encoded data to obtain raw data, for example, any one or more of image data, audio data, and video data. Then, the thread interacts with the portal module 1224, and the portal module 1224 presents the virtual desktop on the desktop display main page based on the raw data.

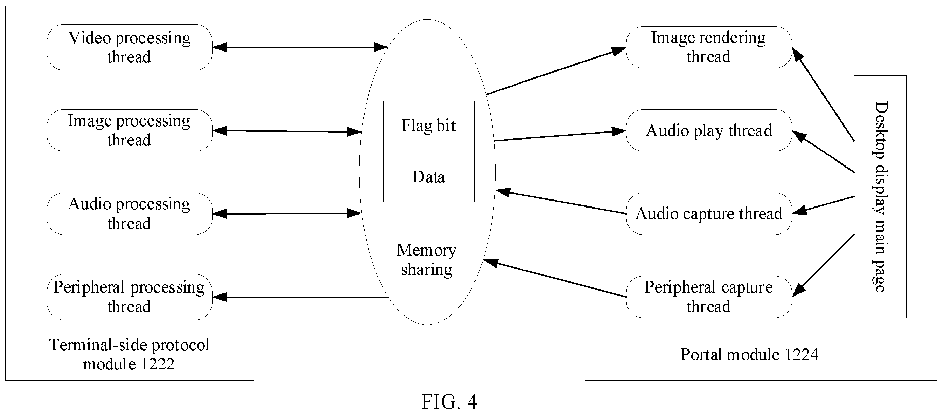

Content displayed on the desktop display main page comes from the terminal-side protocol module 1222. The desktop display main page of the portal module 1224 and the terminal-side protocol module 1222 exchange data in a memory sharing manner. FIG. 4 is a schematic flowchart of exchanging data between the desktop display main page and the terminal-side protocol module 1222. As shown in FIG. 4, the desktop display main page asynchronously interacts with the terminal-side protocol module 1222 by using a shared memory. Specifically, the portal module 1224 and the terminal-side protocol module 1222 determine a time interval based on a specified frame bit rate, and periodically check a flag bit, so as to determine whether data is refreshed. If there is uplink data, the terminal-side protocol module 1222 sends the uplink data to the desktop cloud server 14 by using the websocket client; and if there is downlink data, a corresponding operation such as rendering or playing is performed through the desktop display main page.

Further, different types of data may have different latency-sensitive features. For example, a mouse input event is sensitive to a latency, and video data is insensitive to a latency. Based on this, when asynchronous interaction is performed between the desktop display main page and the terminal-side protocol module 1222 based on the shared memory, the desktop display main page may be updated and displayed at different time intervals based on latency-sensitive features of various types of data, to avoid blocking a main thread of the browser client 122 and affecting overall performance of the desktop cloud system 10.

In the foregoing embodiment, the method for providing a virtual desktop provided in this embodiment of this application is described from a perspective of the desktop cloud system 10. The method provided in this embodiment of this application is described in detail below from a perspective of the terminal 12.

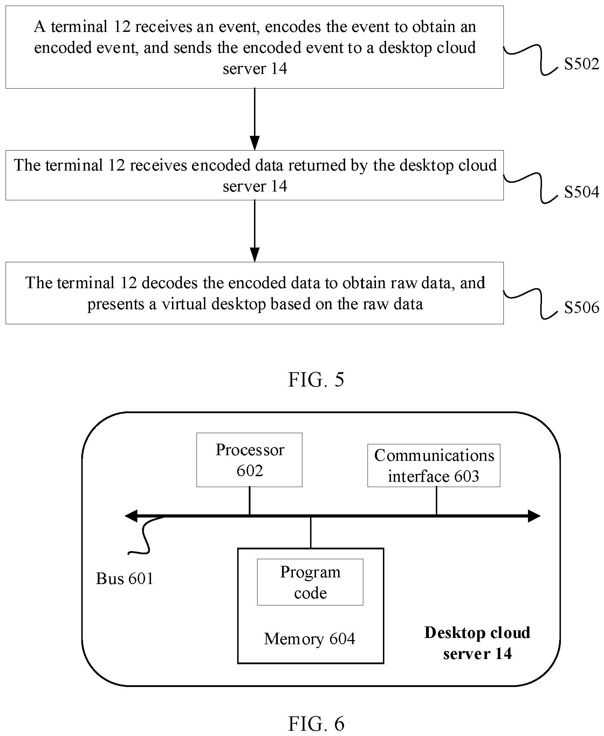

Referring to a flowchart of a method for providing a virtual desktop shown in FIG. 5, the method includes the following steps.

S502: The terminal 12 receives an event, encodes the event to obtain an encoded event, and sends the encoded event to the desktop cloud server 14.

A client, for example, the browser client 122, used to access the virtual desktop instance 142, is deployed on the terminal 12. The terminal 12 may receive the event by using the portal module 1224 of the browser client 122. Specifically, the terminal 12 may capture a peripheral input event, for example, a keyboard input event or a mouse input event, by using the peripheral capture thread in the portal module 1224, or the terminal 12 may capture an audio input event by using an audio capture thread in the portal module 1224.

The terminal 12 may encode the event by using the terminal-side protocol module 1222 of the browser client 122, for example, encode the event such as a keyboard input event, a mouse input event, or an audio input event, to obtain the encoded event.

In some possible implementations, an application layer long connection, for example, a websocket long connection, is established between the terminal 12 and the desktop cloud server 14. When the desktop cloud system 10 includes the desktop gateway 18, an application layer long connection, for example, a websocket long connection, may be established between the terminal 12 (specifically, the terminal-side protocol module 1222) and the desktop gateway 18. In this way, the terminal-side protocol module 1222 of the terminal 12 may send the encoded event through the websocket long connection to the desktop gateway 18, and then send the encoded event to the desktop cloud server 14 by using the desktop gateway 18.

S504: The terminal 12 receives encoded data returned by the desktop cloud server 14.

The encoded data is obtained by the desktop cloud server 14 by operating, based on the encoded event, the virtual desktop instance 142 corresponding to the terminal 12 (which may be specifically the browser client 122 deployed on the terminal 12). The encoded data may be specifically encoded image data, encoded audio data, and encoded video data.

In some possible implementations, the encoded data is sent by the desktop cloud server 14 to the desktop gateway 18, and the terminal 12 may receive the encoded data through the websocket long connection to the desktop gateway 18.

S506: The terminal 12 decodes the encoded data to obtain raw data, and presents a virtual desktop based on the raw data.

In some possible implementations, the terminal 12 may create a plurality of parallel threads by using the terminal-side protocol module 1222, and then process, by using the parallel threads, in parallel any combination of a plurality of the following steps:
encoding the event to obtain the encoded event;
sending the encoded event to the desktop cloud server;
receiving the encoded data; and
decoding the encoded data to obtain the raw data.

The plurality of parallel threads may share memory. In this way, data copying can be reduced, and data processing efficiency can be improved. Further, the portal module 1224 in the browser client 122 may share memory with the terminal-side protocol module 1222. Correspondingly, the portal module 1224 may exchange raw data with the terminal-side protocol module 1222 in a memory sharing manner, and after obtaining the raw data, perform image rendering based on the raw data such as image data, to present the virtual desktop.

In this embodiment of this application, the WebAssembly-based browser client 122 may run in a sandbox environment controlled by the browser client 122, and cannot directly access a device file. Therefore, hardware acceleration provided by the browser client 122 may be used to support hardware acceleration on operations of a desktop cloud, for example, perform graphics processing unit (graphics processing unit, GPU) rendering on a two-dimensional (two-dimensional, 2D) or 3D image by using a WebGL.

In some possible implementations, an acceleration service may be further provided at an operating system level. The service provides an acceleration capability for a WebAssembly program (for example, a terminal-side protocol module 1222) in the browser client 122 in a manner such as memory sharing or a websocket service. In this way, an operation of a large amount of data can be accelerated at a time, and additional overheads caused by interaction of the service can be reduced.

With reference to FIG. 1 to FIG. 5, the foregoing describes in detail the desktop cloud system and the method for providing a virtual desktop based on a desktop cloud system provided in the embodiments of this application. The following describes an apparatus and a device provided in the embodiments of this application.

An embodiment of this application provides an apparatus for providing a virtual desktop. The apparatus includes modules configured to perform the method steps performed by the terminal 12 in the embodiment shown in FIG. 2 or FIG. 5. An embodiment of this application further provides another apparatus for providing a virtual desktop. The apparatus includes modules configured to perform the method steps performed by the desktop cloud server 14 in the embodiment shown in FIG. 2.

The apparatus for providing a virtual desktop according to this embodiment of this application may correspondingly perform the method described in the embodiments of this application, and the foregoing and other operations and/or functions of the modules/units of the apparatus for providing a virtual desktop are separately used to implement corresponding procedures of the methods in the embodiment shown in FIG. 2 or FIG. 5. For brevity, details are not described herein again.

An embodiment of this application further provides a desktop cloud server 14. The desktop cloud server 14 is specifically configured to implement a function of the desktop cloud server 14 in the desktop cloud system 10 shown in FIG. 1. Next, the desktop cloud server 14 is described in detail from a perspective of hardware instantiation.

FIG. 6 is a schematic diagram of a structure of a desktop cloud server 14. As shown in FIG. 6, the desktop cloud server 14 includes a bus 601, a processor 602, a communications interface 603, and a memory 604. The processor 602, the memory 604, and the communications interface 603 communicate with each other through the bus 601.

The bus 601 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 6, but this does not mean that there is only one bus or only one type of bus.

The processor 602 may be any one or more of processors such as a central processing unit (central processing unit, CPU), a graphics processing unit (graphics processing unit, GPU), a microprocessor (microprocessor, MP), or a digital signal processor (digital signal processor, DSP).

The communications interface 603 is an input/output (input/output, I/O) device. The communications interface 603 is configured to communicate with the outside. Specifically, the communications interface 603 may receive an encoded event sent by a terminal 12, or send, to the terminal 12 corresponding to a virtual desktop instance 142, or the like, encoded data output by the virtual desktop instance 142.

The memory 604 may include a volatile memory (volatile memory), for example, a random access memory (random access memory, RAM). The memory 604 may further include a non-volatile memory (non-volatile memory), for example, a read-only memory (read-only memory, ROM), a flash memory, a hard disk drive (hard disk drive, HDD), or a solid state drive (solid state drive, SSD).

The memory 604 stores executable program code. The processor 602 executes the executable program code to perform the foregoing method for providing a virtual desktop.

An embodiment of this application further provides a terminal 12. The terminal 12 is specifically configured to implement a function of the terminal 12 in the desktop cloud system 10 shown in FIG. 1. Next, the terminal 12 is described in detail from a perspective of hardware instantiation.

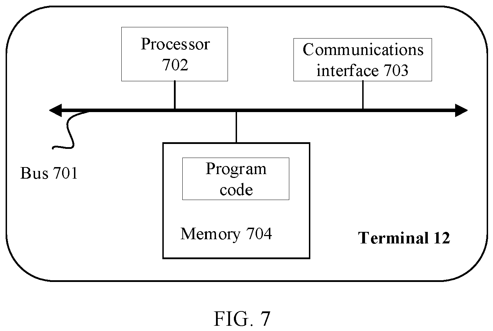

FIG. 7 is a schematic diagram of a structure of a terminal 12. As shown in FIG. 7, the terminal 12 includes a bus 701, a processor 702, a communications interface 703, and a memory 704. The processor 702, the memory 704, and the communications interface 703 communicate with each other through the bus 701.

The bus 701 may be a peripheral component interconnect PCI bus, an extended industry standard architecture EISA bus, or the like. The bus may be classified into an address bus, a data bus, a control bus, and the like. For ease of representation, only one bold line is used for representation in FIG. 7, but this does not mean that there is only one bus or only one type of bus.

The processor 702 may be any one or more of processors such as a central processing unit CPU, a graphics processing unit GPU, a microprocessor MP, or a digital signal processor DSP.

The communications interface 703 is an input/output device. The communications interface 703 is configured to communicate with the outside. Specifically, the communications interface 703 may send an encoded event to a desktop cloud server 14, or receive encoded data sent by the desktop cloud server 14, or the like. Further, the communications interface 703 may further include a display. Based on different manufacturing materials, the display may be classified into a liquid crystal display (liquid crystal display, LCD), an organic light emitting diode (organic light emitting diode, OLED) display, and the like. The communications interface 703 may also include a microphone. The display may present a virtual desktop, and the microphone may receive an audio input.

The memory 704 may include a volatile memory, for example, a random access memory RAM. The memory 704 may further include a non-volatile memory, for example, a read-only memory ROM, a flash memory, a hard disk drive HDD, or a solid state drive SSD.

The memory 704 stores executable program code. The processor 702 executes the executable program code to perform the foregoing method for providing a virtual desktop.

An embodiment of this application further provides a virtual desktop instance 142. The virtual desktop instance 142 is configured to implement a function of the virtual desktop instance 142 in the desktop cloud system 10 shown in FIG. 1.

An embodiment of this application further provides a computer-readable storage medium. The computer-readable storage medium includes instructions, and the instructions instruct a desktop cloud server 14 to perform the foregoing method for providing a virtual desktop.

An embodiment of this application further provides a computer-readable storage medium. The computer-readable storage medium includes instructions, and the instructions instruct a terminal 12 to perform the foregoing method for providing a virtual desktop.

An embodiment of this application further provides a computer program product. When the computer program product is executed by a computer, the computer performs any one of the foregoing methods for providing a virtual desktop. The computer program product may be a software installation package. When any one of the foregoing methods for providing a virtual desktop needs to be used, the computer program product may be downloaded, and the computer program product may be executed on a computer.

## Claims

1. A desktop cloud system, wherein the desktop cloud system comprises a desktop cloud server and a terminal, and a virtual desktop instance is deployed on the desktop cloud server;
the desktop cloud server is configured to: obtain encoded data output by the virtual desktop instance, and send the encoded data to the terminal corresponding to the virtual desktop instance; and
the terminal is configured to: decode the encoded data to obtain raw data, and present a virtual desktop based on the raw data.

2. The system according to claim 1, wherein the desktop cloud server does not encode or decode the encoded data output by the virtual desktop instance.

3. The system according to claim 1 or 2, wherein the terminal is specifically configured to decode, by using a bytecode specification, the encoded data to obtain the raw data.

4. The system according to any one of claims 1 to 3, wherein the terminal is further configured to: receive an event, encode the event to obtain an encoded event, and send the encoded event to the desktop cloud server; and
the desktop cloud server is specifically configured to operate the virtual desktop instance based on the encoded event, to obtain the encoded data output by the virtual desktop instance.

5. The system according to claim 4, wherein the terminal processes in parallel any combination of a plurality of the following steps:
encoding the event to obtain the encoded event;
sending the encoded event to the desktop cloud server;
receiving the encoded data; and
decoding the encoded data to obtain the raw data.

6. The system according to claim 4 or 5, wherein the event comprises at least one of a mouse input event, a keyboard input event, and an audio input event.

7. The system according to any one of claims 1 to 6, wherein the raw data comprises any one or more of image data, audio data, and video data.

8. The system according to any one of claims 1 to 7, wherein a browser client used to access the virtual desktop instance is deployed in the terminal.

9. A method for providing a virtual desktop, applied to a desktop cloud system, wherein the desktop cloud system comprises a desktop cloud server and a terminal, a virtual desktop instance is deployed on the desktop cloud server, and the method comprises:
obtaining, by the desktop cloud server, encoded data output by the virtual desktop instance, and sending the encoded data to the terminal corresponding to the virtual desktop instance; and
decoding, by the terminal, the encoded data to obtain raw data, and presenting a virtual desktop based on the raw data.

10. The method according to claim 9, wherein the method further comprises:
skipping, by the desktop cloud server, encoding or decoding the encoded data output by the virtual desktop instance.

11. The method according to claim 9 or 10, wherein the decoding, by the terminal, the encoded data to obtain raw data comprises:
decoding, by the terminal by using a bytecode specification, the encoded data to obtain the raw data.

12. The method according to any one of claims 9 to 11, wherein the method further comprises:
receiving, by the terminal, an event, encoding the event to obtain an encoded event, and sending the encoded event to the desktop cloud server; and
the obtaining, by the desktop cloud server, encoded data output by the virtual desktop instance comprises:
operating, by the desktop cloud server, the virtual desktop instance based on the encoded event, to obtain the encoded data output by the virtual desktop instance.

13. The method according to claim 12, wherein the terminal processes in parallel any combination of a plurality of the following steps:
encoding the event to obtain the encoded event;
sending the encoded event to the desktop cloud server;
receiving the encoded data; and
decoding the encoded data to obtain the raw data.

14. The method according to claim 12 or 13, wherein the event comprises at least one of a mouse input event, a keyboard input event, and an audio input event.

15. The method according to any one of claims 9 to 14, wherein the raw data comprises any one or more of image data, audio data, and video data.

16. The method according to any one of claims 9 to 15, wherein a browser client used to access the virtual desktop instance is deployed in the terminal.

17. A desktop cloud server, wherein the desktop cloud server is configured to implement a function of the desktop cloud server in the desktop cloud system according to any one of claims 1 to 8.

18. A terminal, wherein the terminal is configured to implement a function of the terminal in the desktop cloud system according to any one of claims 1 to 8.

19. A virtual desktop instance, wherein the virtual desktop instance is configured to implement a function of the virtual desktop instance in the desktop cloud system according to any one of claims 1 to 8.

20. A desktop cloud server, wherein the desktop cloud server comprises a processor and a memory, wherein the processor is configured to execute instructions stored in the memory, to enable the desktop cloud server to perform the method according to any one of claims 9 to 16.

21. A terminal, wherein the terminal comprises a processor and a memory, wherein
the processor is configured to execute instructions stored in the memory, to enable the terminal to perform the method according to any one of claims 9 to 16.

22. A computer-readable storage medium, comprising instructions, wherein the instructions are used to instruct a computer to perform the method according to any one of claims 9 to 16.

23. A computer program product, wherein when the computer program product runs on a computer, a computer is enabled to perform the method according to any one of claims 9 to 16.
